Europäisches Patentamt

European Patent Office

Office européen des brevets

(11) Publication number: **0 194 343 B1**

# EUROPEAN PATENT SPECIFICATION

(45) Date of publication of patent specification: **05.06.91**  (51) Int. Cl.⁵ **F02M 35/026, B01D 46/10**

(21) Application number: **85114014.5**

(22) Date of filing: **04.11.85**

(54) **Air filter with high filtration power.**

(30) Priority: **04.12.84 IT 4688384**

(43) Date of publication of application:
**17.09.86 Bulletin 86/38**

(45) Publication of the grant of the patent:
**05.06.91 Bulletin 91/23**

(84) Designated Contracting States:
**AT BE CH DE FR GB LI LU NL SE**

(56) References cited:
**DE-A- 2 847 130**
**FR-A- 2 476 752**
**US-A- 4 265 647**

(73) Proprietor: **LOMBARDINI Fabbrica Italiana Motori S.p.A.**
**6, Via F.lli Manfredi**
**I-42100 Reggio Emilia(IT)**

(72) Inventor: **Mauro, Bodo**
**41, Via Puccini**
**I-42100 Reggio Emilia(IT)**

(74) Representative: **Corradini, Corrado**
**STUDIO SECCHI & CORRADINI 4, Via Dante Alighieri**
**I-42100 Reggio Emilia(IT)**

## Description

This industrial invention patent relates to an air filter for internal combustion engines in general, which is characterised by having a very high filtration effect, close to 100%, a high capacity of saturation by the dust separated from the air, and a construction such as to enable its dimensions to be limited to the overall dimensions of normal oil bath filters used on engines.

In internal combustion engines for operation in particularly dusty environments, it is known to normally use oil bath air filters comprising a casing provided with an inlet port and an outlet port, and internally containing an oil bath and an overlaying filter cartridge in the form of a mesh of thin metal filements.

Said oil bath filters are particularly suitable for very dusty environments in that they have a high dust saturation capacity, but their filtration effect is not paticularly high, the quantity of dust retained being of the order of 95-96%.

This efficiency level of known oil bath filters is however too low for engines operating in very dusty environments, as the dust is extremely damaging to the life or duration of an engine.

Consequently, in the engine field in general and in particular in the field of machines and equipment operating in the constant presence of dust, such as earth working and/or moving machines, there is a deeply felt requirement for an air filter which besides possessing a high dust saturation capacity also has a very high dust removal power.

In the known art see BUSSIEN - Automobil Technisches Handbuch - 18th Ed. part 1, 1965 Technischer Verlag Herbert Cram, Berlin pages 793 to 801, namely page 800 Fig 9, in order to satisfy said requirement two filters are connected in series, namely an oil bath filter with the said high dust saturation capacity, and a paper filter disposed between the oil bath filter and the engine intake manifold, the paper filter having a low dust saturation capacity but enabling such arrangements to reach a high dust removal level.

In this respect, the paper filter is able to absorb 98.5-99.9% of the dust present in the intake air stream which has previously been purified by the oil bath filter.

According to the known art, the said series arrangement of two knownfilters is necessary to prevent the paper filter becoming wetted by the oil, otherwise the paper filter would immediately clog.

Consequently, as the two filters cannot be housed in a single container, two separate housings together with all the corresponding connection pipework have to be constructed, and this besides complicating such a composite filter and making it relatively costly means that it becomes excessively bulky and thus difficult to install on modern engines where the available space is increasingly restricted.

Moreover, the said restrinction in the available space sometimes means that sophisticated constructions have to be used, and these are not always easy to effect.

Several attempts were made to overcome the above drawbacks.

US. - A - 4265647 discloses a filtering unit in which, a pre-filter is arranged upstream to a commonly known oil bath filter.

The pre-filter consists of a perforated sleeve connected between the usual intake openings and the filter element of the conventional air filter.

FR-A-2476752 discloses an air-filter, comprising an internal perforated sleeve, a conventional paper filtering element and an external porous mass consisting of foamed polyurethane open cell mass, which is located upstream the paper element, and is impregnated by a resin.

DE-A- 2847130 discloses an air filter consisting of a single container in which a central conduit, communicating with the air intake, is immersed in an oil bath.

A first lower filtering mass of metal wire mesh is located in the anular space between the central conduit and the container wall, but does not occlude it completely.

Means are provided upper (downstream) the first mass to separe the oil drops entrained by the air stream.

A second middle filtering mass is located in the annular space between the central conduit and the container wall, downstream the oil drops separator means and it consists of a conventional filtering element.

A third upper filtering mass is located down stream the second filtering mass and consists of a conventional paper filtering element.

All the above mentioned filtering units consist of a less or more complicated combination of conventional filtering means, and do not give a proper answer to the need to have an oil bath filter, with very high filtering capacity and dust saturation capacity, which is housed in a single container of reduced overall dimensions.

The scope of the present patent is to provide and protect an air filter having a filtering capacity and dust saturation capacity which are equal to or greater than those of the aforesaid composite filter and greater than those of the individual oil bath and dry filters, while being of simple construction and is housed in a single container of normal overall dimensions.

This is attained according to the invention by combining within the same casing of a conventional oil bath filter only one lower filtering mass consisting of metal wire mesh and only one upper filtering mass consisting of porous foamed open cell material, both the masses completely occluding the annular space between the central conduit and the casing, the upper filtering mass being disposed downstream and near to the lower filtering mass to be wetted by the oil droplets entrained by the air stream, in order to improve its filtering effect.

By virtue of the said combination, the invention has an excellent dust saturation capacity due to the presence of the oil bath filter, and a high dust removal capacity as the oil which wets the porous filtering mass considerably increases its filtration effect, with almost total retention of the dust still present in the air stream leaving the oil bath filter.

According to the invention, said porous filtering mass is foamed synthetic resin, the characteristics of which are described hereinafter.

Moreover, combining said two filtering masses enables them to be housed in a single casing of normal overall dimensions, for example said casing can be the casing which normally contains only the oil bath filter.

The constructional characteristics and merits of the invention will be more apparent from the detailed description given hereinafter with reference to the single accompanying figure which illustrates a preferred embodiment thereof by way of non-limiting example.

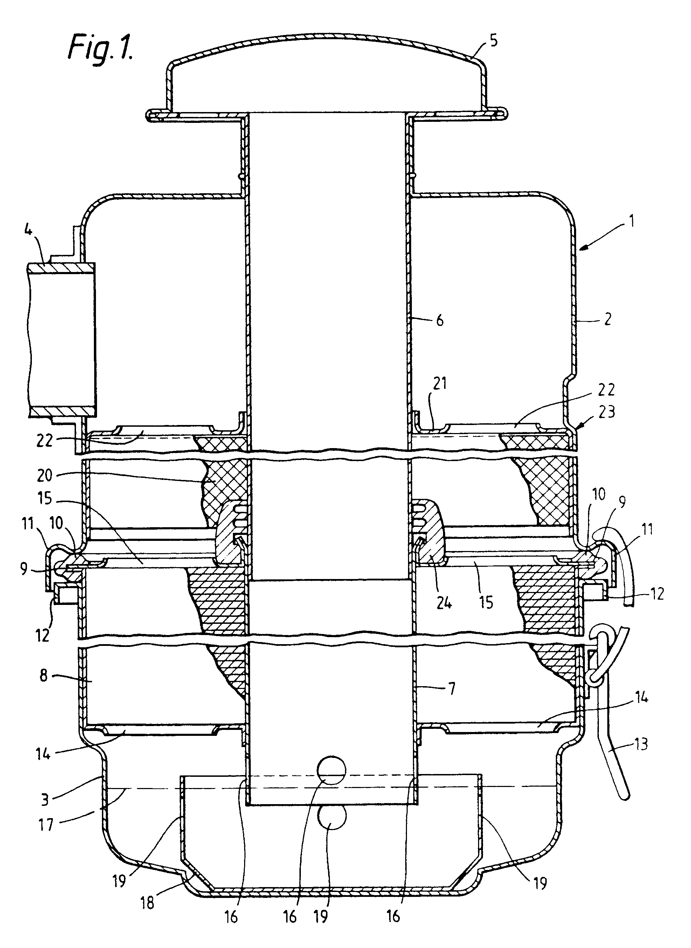

In the accompanying Figure 1 the invention is shown in longitudinal section, and comprises a thin metal casing 1 consisting of two opposing half shells 2 and 3, namely an upper and a lower.

The half shell 2 is provided upperly with a side discharge connector 4 for connection to the intake manifold of an internal combustion engine, the said half shell 2 comprising at its top a central intake cap 5 which is upperly blank and lowerly perforated.

Said cap 5 is followed by a central tube 6 which extends to reach the open end of the half shell 2, where a second tube 7 pertaining to a normal filter cartridge 8 for oil bath filters is mounted over the lower end of said tube 6.

This cartridge consists of an outer holder containing a mesh of thin metal filaments, and fits practically exactly into the upper part of the lower half shell 3.

The cartridge 8 has an upper circumferential rim 9 on its holder, provided with an annular gasket 10 which is received in a widened mouth 11 of the upper half shell 2, against which it is clamped by a projecting rim 12 provided on the mouth of the lower half shell 3.

The two half shells 2, 3 are fixed together by clips 13, of which only one is shown in the figure, and which are connected to the lower half shell 3.

The upper and lower transverse walls of the holder for the filter cartridge 8 are provided with respective openings 14, 15 for passage of the intake air, and the central tube 7 of said holder extends below the cartridge 8 where it comprises a circumferential set of equidistant radial holes 16.

At the base of the lower half shell 3 there is provided an oil bath 17 into which the lower end of the tube 7 is inserted, and to the centre of the base there is fixed a dish 18 provided with a circumferential set of holes 19. The holes 19 of the dish 18 are completely immersed in the oil 17, whereas the holes 16 of the tube 7 are above the bath 17.

The elements heretofore described pertain to a normal oil bath filter.

According to the invention, in combination with said oil bath filter there is a porous filtering mass 20 of annular shape which embraces the lower end of the tube 6.

Said porous mass 20 is contained in an inverted cup 21 which contains a central hole to enable it to be mounted over the tube 6, and is provided in its base with air passage holes 22.

Said cup 21 is prevented from sliding axially by a shoulder 23 provided on the upper half shell 2, and by a central seal gasket 24 provided between the porous mass 20 and the filter cartridge 8.

According to the invention, the porous filtering mass 20, which is constantly wetted by the oil droplets entrained by the intake air stream, consists of foamed synthetic resin.

For example, from tests carried out it has been found that excellent results are obtained with a mass formed from foamed open-cell polyurethane of controlled porosity, having a density of between 30 and 40 $kg/m^3$ and preferably 35 $kg/m^3$, and a porosity of between 40 and 50 PPI and preferably 45 PPI determined as the ratio of the void volume to the material volume.

Other porous massas of a foamed open cell material having corresponding or equivalent characteristics can obviously be used.

By virtue of the said combination, when a mass of air is drawn into the device of the invention, most of the filtration takes place firstly within the oil filter (17, 8) with a dust removal of about 97-97%, and the remaining 5-3% are practically completely retained by the mass 20 because of the synergic effect of the foamed material and the oil which keeps it constantly wetted, the filtration effect of the foamed material being greatly increased by the presence of the oil.

All the objects of the invention are therefore attained in that it has an exceptional dust removal capacity, a high dust saturation capacity, and an overall size which does not exceed that of a normal oil bath air filter, as stated,

**Claims**

1. An air filter for internal combustion engines, comprising an outer casing (1) provided with an upper inlet port (5) and an upper lateral outlet port (4), from said inlet port there downwardly extending a central conduit (6, 7) to a position in proximity to the base of the casing, where it is immersed in an oil bath (17), around said conduit there being mounted filtering masses consisting of a metal wire mesh, and of conventional air filtering means said filtering masses being traversed by the air stream passing through the filter, characterised in that it comprises only one lower filtering mass (8) consisting of a metal wire mesh and only one upper filtering mass (20) consisting of porous foamed open cell material, both the masses (8) and (20) completely occluding the annular space between the central conduit and the casing, the upper filtering mass (20) being disposed downstream and near to the lower filtering mass (8) to be wetted by the oil droplets entrained by the air stream, in order to improve its filtering effect.

2. An air filter as claimed in claim 1, characterised in that said upper filtering mass (20) consists of foamed open-cell polyurethane of controlled porosity having a density of between 30 and 40 kg/m$^3$, and a porosity of between 40 and 50 PPI.

**Revendications**

1. Filtre à air pour moteurs à combustion interne comportant un boîtier extérieur (1) muni d'un orifice d'entrée supérieur (5) et un orifice de sortie latérale supérieur (4), à partir dudit orifice d'entrée s'étendant vers le bas, un conduit central (6, 7) vers une position au voisinage de la base du boîtier, où il se trouve immergé dans un bain d'huile (17), des masses de filtrage étant montées autour dudit conduit, lesquelles consistent en un tamis de fils métalliques et des moyens de filtrage d'air classiques, lesdites masses de filtrage étant traversées par le courant d'air passant à travers le filtre, caractérisé en ce qu'il comporte seulement une masse de filtrage inférieure (8) qui consiste en un tamis de fils métalliques et seulement une masse de filtrage supérieure (20) qui consiste en une mousse formant matériau poreux à cellules ouvertes, les deux masses (8 et 20) fermant totalement l'espace annulaire compris entre le conduit central et le boîtier, la masse de filtrage supérieure (20) étant disposée en aval et au voisinage de la masse de filtrage inférieure (8) de façon à être mouillée par les gouttelettes d'huile entraînées par le courant d'air, de façon à améliorer son effet de filtrage.

2. Filtre à air tel que revendiqué dans la revendication 1, caractérisé en ce que ladite masse de filtrage supérieure (20) consiste en de la mousse de polyuréthanne à cellules ouvertes de porosité contrôlée ayant une densité comprise entre 30 et 40 kg/m$^3$ et une porosité comprise entre 40 et 50 PPI.

**Ansprüche**

1. Luftfilter für Verbrennungsmotoren mit einem äusseren Gehäuse (1) mit einem oberen Einlaß (5) und einem oberen seitlichen Auslaß (4), wobei sich von dem Einlaß ein abwärts gerichteter Hauptkanal (6,7) in eine Lage nahe der Gehäusebasis erstreckt, wo er in ein Ölbad (17) eingetaucht ist, wobei um den Kanal Filtermassen angeordnet sind, die aus einem Metallmaschendraht bestehen, und aus herkömmlichen Luftfiltermitteln, wobei die Filtermassen von dem den Filter passierenden Luftstrom durchquert werden, **dadurch gekennzeichnet, daß** der Luftfilter nur eine untere Filtermasse (8), die aus einem Metallmaschendraht besteht, und nur eine obere Filtermasse (20) aufweist, die aus einem porösen geschäumten offenzelligen Material besteht, wobei beide Massen (8,20) den ringförmigen Raum zwischen dem Hauptkanal und dem Gehäuse vollständig verschließen, wobei die obere Filtermasse (20) stromabwärts und nahe der unteren Filtermasse (8) angeordnet ist, um durch die mit dem Luftstrom eingebrachten Öltropfen benetzt zu werden, um die Filterkraft zu verbessern.

2. Luftfilter nach Anspruch 1, **dadurch gekennzeichnet, daß** die obere Filtermasse (20) aus einem geschäumten, offenzelligen Polyurethan von kontrollierter Porosität besteht, mit einer Dichte zwischen 30 und 40 kg/m$^3$ und einer Porosität zwischen 40 und 50 PPI.

*Fig.1.*